# FASCICULE DE BREVET EUROPEEN

(11) **EP 3 287 320 B1**
(45) Date de publication et mention de la délivrance du brevet: **07.06.2023**
(21) Numéro de dépôt: 17186594.2
(22) Date de dépôt: 17.08.2017
(51) Int. Cl.: B60Q 1/46, B60Q 1/50, B60Q 5/00, B60R 21/34, B61D 13/00

(54) **VÉHICULE DE TRANSPORT PUBLIC URBAIN, NOTAMMENT TRAMWAY**
ÖFFENTLICHES TRANSPORTFAHRZEUG, INSBESONDERE STRASSENBAHN
URBAN PUBLIC TRANSPORT VEHICLE, IN PARTICULAR TRAMWAY

(30) Priorité: 26.08.2016 FR 1657953
(43) Date de publication de la demande: 28.02.2018
(73) Titulaire: ALSTOM Transport Technologies, 93400 Saint-Ouen (FR)
(72) Inventeur: MIGLIANICO, Denis, 75009 PARIS (FR)
(74) Mandataire: Lavoix

(56) Documents cités:
- EP-A1- 3 121 062
- WO-A1-2010/036198
- CN-A- 102 126 463
- DE-A1-102007 046 309
- US-A- 3 113 293
- US-A- 4 213 115
- US-A- 5 477 208
- US-A1- 2002 190 847

## Description

La présente invention concerne un véhicule de transport public urbain, notamment un tramway.

On connait déjà, dans l'état de la technique, des dispositifs d'avertissement sonores, destinés à avertir des piétons de l'arrivée du véhicule de transport public. Les piétons avertis s'écartent alors du passage du véhicule, afin d'éviter dans le meilleur des cas un ralentissement du véhicule, et les pires des cas un arrêt d'urgence (pouvant mettre en danger les passagers), voire un accident impliquant lesdits piétons.

Toutefois, certains piétons ne sont pas en mesure d'entendre un tel dispositif d'avertissement sonore, notamment les personnes malentendantes, ou encore les personnes équipées d'écouteurs diffusant une musique masquant l'avertissement sonore.

Afin que ces piétons puissent également être avertis, on connait également dans l'état de la technique, notamment d'après US 3 113 293 (D1), des dispositifs d'avertissement lumineux. Ces dispositifs ont pour but de prévenir visuellement de l'arrivée du véhicule. Ainsi, les personnes susceptibles de ne pas entendre un avertisseur sonore sont averties visuellement, l'avertisseur lumineux attirant leur attention.

L'invention a notamment pour but d'optimiser un tel dispositif d'avertissement, afin d'améliorer la sécurité des piétons malentendants ou dont l'audition est affectée.

A cet effet, l'invention a notamment pour objet un véhicule de transport public urbain, notamment un tramway selon la revendication 1.

A la base de l'invention, il a été constaté qu'une telle fréquence de clignotement de fréquence supérieure à 10 Hz attire l'attention des piétons de manière particulièrement efficace.

Un véhicule de transport public urbain, notamment un tramway selon l'invention peut comporter en outre l'une ou plusieurs des caractéristiques techniques suivantes, prises seules ou selon toutes combinaisons techniquement envisageables.
- La lumière émise par l'avertisseur lumineux présente une intensité supérieure à 900 lux à 1 mètre.
- La lumière émise par l'avertisseur lumineux clignote avec un rapport cyclique compris entre 45 et 55%.
- La lumière émise par l'avertisseur lumineux clignote avec un rapport cyclique sensiblement égal à 50%.
- L'avertisseur lumineux comporte au moins une lampe flash xénon.
- L'avertisseur lumineux comporte au moins une diode électroluminescente de forte puissance.
- Le dispositif d'avertissement comporte un avertisseur sonore, et des moyens d'activation simultanés de l'avertisseur sonore et de l'avertisseur lumineux.

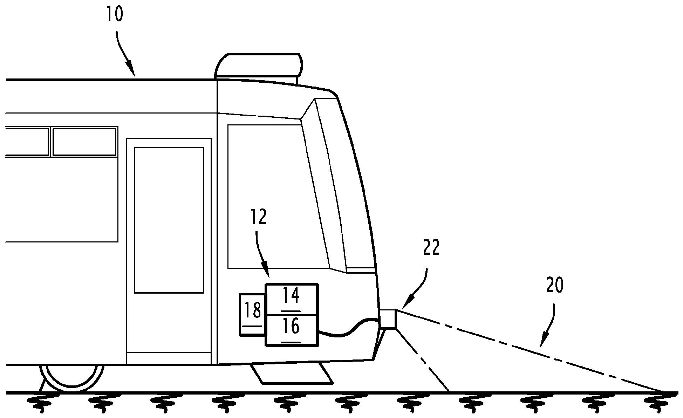

L'invention sera mieux comprise à la lecture de la description qui va suivre, donnée uniquement à titre d'exemple et faite en se référant à la figure annexée, représentant schématiquement et partiellement un véhicule de transport public muni d'un dispositif d'avertissement selon un exemple de mode de réalisation de l'invention.

On a représenté partiellement sur la figure un véhicule 10 de transport public urbain, notamment un tramway.

Le véhicule 10 comporte un dispositif d'avertissement 12, destiné notamment à prévenir des piétons, proches de la trajectoire du véhicule 10, de l'arrivée de ce véhicule 10, afin d'éviter un ralentissement, un arrêt d'urgence ou un accident impliquant ces piétons.

Le dispositif d'avertissement 12 comporte de manière classique un avertisseur sonore 14, permettant de manière efficace d'avertir les piétons par un son caractéristique.

Toutefois, certains piétons, malentendants ou équipés d'écouteurs, ne sont pas en mesure d'entendre ce son.

Afin que de tels piétons soient également avertis de l'arrivée du véhicule 10, le dispositif d'avertissement 12 comporte également un avertisseur lumineux 16, destiné à émettre un signal lumineux à destination de ces piétons.

Avantageusement, le dispositif d'avertissement 12 comporte des moyens 18 d'activation simultanés de l'avertisseur sonore 14 et de l'avertisseur lumineux 16. Il est en effet préférable d'avertir à la fois par un signal sonore et par un signal lumineux de l'arrivée du véhicule, pour avertir simultanément tous les piétons, malentendants ou non.

L'avertisseur lumineux 16 comporte un stroboscope, propre à émettre une lumière stroboscopique 20 vers l'avant du véhicule.

Conformément à l'invention, l'avertisseur lumineux 16 est configuré pour émettre des rayons lumineux vers le bas. En effet, il apparait que la projection de la lumière stroboscopique 20 sur le sol optimise sa visibilité.

Conformément à l'invention, l'avertisseur lumineux 16 est configuré pour émettre une lumière stroboscopique clignotant avec une fréquence supérieure à 10 Hz.

En effet, il apparaît qu'une telle fréquence supérieure à 10 Hz est optimale pour que le signal lumineux soit perçu de manière efficace par les piétons.

Avantageusement, la lumière 20 émise par le stroboscope présente une intensité supérieure à 900 lux à 1 mètre. Cette caractéristique améliore encore la visibilité du signal lumineux 20.

Avantageusement, de manière alternative ou complémentaire à l'intensité de lumière définie ci-dessus, la lumière émise par le stroboscope lumineux clignote avec un rapport cyclique compris entre 45 et 55%, de préférence sensiblement égale à 50%.

Il apparait en effet qu'un tel rapport cyclique est optimal pour que le signal lumineux soit perçu de manière efficace par les piétons.

Il est à noter que l'avertisseur lumineux 16 comporte au moins un organe 22 d'émission de lumière agencé à l'avant du véhicule 10, par exemple au moins une lampe flash xénon et/ou au moins une diode électroluminescente de forte puissance.

## Revendications

1. Véhicule (10) de transport public urbain, notamment tramway équipé d'un dispositif d'avertissement (12) comportant un avertisseur lumineux (16), l'avertisseur lumineux (16) étant configuré pour émettre une lumière stroboscopique (20) vers l'avant du véhicule (10) en clignotant avec une fréquence supérieure à 10 Hz, **caractérisé en ce que** l'avertisseur lumineux (16) est configuré pour émettre des rayons lumineux vers le bas pour projeter la lumière stroboscopique (20) sur le sol lorsqu'il est monté sur le véhicule de transport public (10).

2. Véhicule (10) de transport public urbain selon la revendication 1, dans lequel la lumière (20) émise par l'avertisseur lumineux (16) présente une intensité supérieure à 900 lux à 1 mètre.

3. Véhicule (10) de transport public urbain selon l'une quelconque des revendications précédentes, dans lequel la lumière (20) émise par l'avertisseur lumineux (16) clignote avec un rapport cyclique compris entre 45 et 55%.

4. Véhicule (10) de transport public urbain selon l'une quelconque des revendications 1 à 3, dans lequel la lumière (20) émise par l'avertisseur lumineux (16) clignote avec un rapport cyclique sensiblement égal à 50%.

5. Véhicule (10) de transport public urbain selon l'une quelconque des revendications précédentes, dans lequel l'avertisseur lumineux (16) comporte au moins une lampe flash xénon (22).

6. Véhicule (10) de transport public urbain selon l'une quelconque des revendications précédentes, dans lequel l'avertisseur lumineux (16) comporte au moins une diode électroluminescente (22) de forte puissance.

7. Véhicule (10) de transport public urbain selon l'une quelconque des revendications précédentes, comportant un avertisseur sonore (14), et des moyens (18) d'activation simultanés de l'avertisseur sonore (14) et de l'avertisseur lumineux (16).

## Patentansprüche

1. Fahrzeug (10) des öffentlichen Nahverkehrs, insbesondere Straßenbahn, das mit einer Warnvorrichtung (12) ausgestattet ist, umfassend eine Lichthupe (16), wobei die Lichthupe (16) konfiguriert ist, um ein Stroboskoplicht (20) in Richtung der Vorderseite des Fahrzeugs (10) durch Blinken mit einer Frequenz von mehr als 10 Hz zu emittieren, **dadurch gekennzeichnet, dass** die Lichthupe (16) konfiguriert ist, um Lichtstrahlen nach unten zu emittieren, um das Stroboskoplicht (20) auf den Boden zu projizieren, wenn sie an dem öffentlichen Transportfahrzeug (10) montiert ist.

2. Fahrzeug (10) des öffentlichen Nahverkehrs nach Anspruch 1, wobei das von der Lichthupe (16) emittierte Licht (20) in 1 Meter Entfernung eine Intensität von mehr als 900 Lux aufweist.

3. Fahrzeug (10) für den öffentlichen Nahverkehr nach einem der vorherigen Ansprüche, wobei das von der Lichthupe (16) emittierte Licht (20) mit einem zyklischen Verhältnis zwischen 45 und 55 % blinkt.

4. Fahrzeug (10) des öffentlichen Nahverkehrs nach einem der Ansprüche 1 bis 3, wobei das von der Lichthupe (16) emittierte Licht (20) mit einem zyklischen Verhältnis von im Wesentlichen 50 % blinkt.

5. Fahrzeug (10) des öffentlichen Nahverkehrs nach einem der vorherigen Ansprüche, wobei die Lichthupe (16) mindestens eine Xenon-Blitzlampe (22) umfasst.

6. Fahrzeug (10) des öffentlichen Nahverkehrs nach einem der vorherigen Ansprüche, wobei die Lichthupe (16) mindestens eine lichtemittierende Diode (22) mit hoher Leistung umfasst.

7. Fahrzeug (10) des öffentlichen Nahverkehrs nach einem der vorherigen Ansprüche, umfassend eine akustische Hupe (14) und Einrichtungen (18) zur gleichzeitigen Aktivierung der akustischen Hupe (14) und der Lichthupe (16).

## Claims

1. An urban public transport vehicle (10), in particular a tramway equipped with a warning device (12) including a warning light mechanism (16), the warning light mechanism (16) being configured so as to emit a flashing strobe light (20) in the frontwards direction of the vehicle (10) by flashing at a frequency that is higher than 10 Hz, **characterized in that** the warning light mechanism (16) is configured in order to emit light rays in a downward direction so as to project the strobe light (20) on the ground when it is mounted on the public transport vehicle (10).

2. Public transport vehicle (10) according to claim 1, wherein the light (20) emitted by the warning light mechanism (16) is of an intensity that is greater than 900 lux at 1 metre.

3. Public transport vehicle (10) according to any one of the preceding claims, wherein the light (20) emitted by the warning light mechanism (16) flashes with a duty cycle comprised between 45% and 55%.

4. Public transport vehicle (10) according to any one of the preceding claims, wherein the light (20) emitted by the warning light mechanism (16) flashes with a duty cycle that is substantially equal to 50%.

5. Public transport vehicle (10) according to any one of the preceding claims, wherein the warning light mechanism (16) comprises at least one xenon flash lamp (22).

6. Public transport vehicle (10) according to any one of the preceding claims, wherein the warning light mechanism (16) comprises at least one high power light emitting diode (22).

7. Public transport vehicle (10) according to any one of the preceding claims, that includes an audible sound warning mechanism (14), and the simultaneous activation means (18) for simultaneously activating the audible sound warning mechanism (14) and the warning light mechanism (16).
